# EUROPÄISCHE PATENTSCHRIFT

(11) **EP 0 962 373 B1**
(45) Veröffentlichungstag und Bekanntmachung des Hinweises auf die Patenterteilung: **30.03.2005**
(21) Anmeldenummer: 98109956.7
(22) Anmeldetag: 02.06.1998
(51) Int. Cl.: B61D 17/08, B61D 17/10, B62D 21/02

(54) **Tragstruktur für Flächenelemente für Wagenkästen und Untergestelle von Schienenfahrzeugen**
Supporting structure for surface elements for vehicle bodies and underframes of railway vehicles
Structure de suppport pour éléments de surface pour caisses et chassis de véhicules ferroviaires

(43) Veröffentlichungstag der Anmeldung: 08.12.1999
(73) Patentinhaber: ALSTOM LHB GmbH, 38239 Salzgitter (DE)
(72) Erfinder: Grüning, Hans, 38259 Salzgitter (DE); Hohenstein, Michael, 38226 Salzgitter (DE); Nowack, Ulrich, Dipl.-Ing., 38259 Salzgitter (DE)

(56) Entgegenhaltungen:
- DE-A- 3 906 628
- DE-A- 19 609 722
- DE-C- 19 521 892
- DE-U- 29 708 953
- US-A- 3 626 464

## Beschreibung

Die Erfindung betrifft ein Schienenfohrzeug mit einer Tragstruktur für die Flächenelemente des Wagenkästens und Untergestelles.

Aus der DE 30 06 371 A1 oder der DE 38 23 208 A1 ist es bekannt, unter den flächigen Fußbodenelement von Eisenbahngüterwagen ein relativ eng gefächertes Tragwerk aus Stahlträgern anzuordnen. Das Tragwerk hat dabei im Wesentlichen die Last aus seinem Eigengewicht, der Bodenplatte samt Aufbauten und der Zuladung abzustützen.

Aus der DE 29 10 755 A1 ist ein Fußboden für Schienenfahrzeuge bekannt, bei dem das Tragelement für die Fußbodenplatte aus einer möglichst großflächig und nach Art eines Gitterrostes aus einem eckigen Rahmen mit daran angeformten gitterförmigen Verstrebungen ausgebildeten Hartschaumplatte besteht.

Gitterroste mit ineinander gesteckten und verschweißten Stegblechen sowie Bodenplatten mit Gittern aus gleichartigen, geschlitzten Metallstreifen sind z B. aus der DE 34 42 509 A1, gleichartige Gitterroste für Schienenfahrzeuge aus der US 2,878,761 bekannt.

Aus der Zeitschrift "Leichtbau der Verkehrsfahrzeuge, Heft 4/1969, Seiten 188-192" ist es bekannt, den Wagenkastenrohbau in Baukastenbauweise mit vorgefertigten Bauuntergruppen zu fertigen. Die Seitenwände werden dabei aus vorgefertigten Kleinsektionen zusammengesetzt, die jeweils eine geschweißte Tragstruktur aus Profilen aufweisen, auf die eine Außenbeblechung durch Punktschweißen aufgebracht ist.

Aus der DE 39 06 628 A1 ist eine Bodenplattform für ein Chassis von Lastfahrzeugen, insbesondere Sattelaufliegern, für Container-Böden, Schiffsdecks und dergleichen bekannt, die ein Tragwerk und eine das Tragwerk wenigstens auf einer Flachseite abschließende Abdeckung umfasst. Die Aufgabenstellung, eine Bodenplattform der vorgenannten Art anzugeben, die in ihrer Bauhöhe deutlich gegenüber dem üblichen Träger-Traversen-Holzbohlen-Aufbau verringert ist und damit einen höheren Nutzraum für das Fahrzeug ergibt, wird dadurch gelöst, dass das Tragwerk der Bodenplattform wenigstens teilweise aus einer Wabenstruktur besteht, die aus sich untereinander kreuzenden Stegblechen und aus mit einem Teil der Kanten der Stegbleche verbundenen die Wabenstruktur einschließenden und versteifenden Decktafeln besteht, wobei letztere wenigstens teilweise als Bodenplotte dienen. Die eigentliche Verfestigung der Wabenstruktur wird dadurch hergestellt, dass bei verschweißbaren Materialien wenigstens dort, wo die sich kreuzende Kanten der Stegbleche Kontakt haben, sie zusammen über eine Kreuzkonfiguration verschweißt sind. Für andere Materialien wird ein Verkleben der Kontakiflansche der Profile mit den Decktcdeln vorgeschlagen. Spezifische Besonderheiten im Schienenfahrzeugbereich bezüglich der dort zu erfüllenden Anforderungen, insbesondere hinsichtlich der zu berücksichtigenden Belastungen und Lastrichtungen werden nicht abgehandelt.

Das Fertigen einer Tragstruktur für Wandelemente und Untergestelle von Schienenfahrzeugen erfordert eine erhebliche Anzahl von Einzelteilen wie Trägern, Profilen und Flanschen, die aufwendig einzeln verschweißt werden müssen. Dazu müssen die Vorrichtungen zum Festhalten der Einzelteile in Schweißposition eine Vielzahl von Anschlägen und Auflagen aufweisen. Pro Einzelteil muß mit zwei Anschlägen und zwei Auflagen sowie einem Niederhalten gerechnet werden. Die Vorrichtung muß hergestellt, eingerichtet, nivelliert und gewartet werden. Außerdem müssen alle Teile der Tragstruktur, die zum Außenlangträger liegen, angepaßt werden. Durch das Anpassen entsteht zusätzlich ein großer Anteil an Richtarbeiten, die als Folge von Schweißschrumpf bzw. zu großem Schweißschrumpf nötig sind.

Der Erfindung liegt die Aufgabe zugrunde, für Flächenelemente eines Schienenfahrzeugeleine ausreichend belastbare Tragstruktur aufzufinden, die wirtschaftlicher, als bisher zu fertigen ist, indem insbesondere der Aufwand für notwendige Vorrichtungen und für aufwendige Nacharbeiten, wie z. B. für das Richten nach Schweißschrumpf, verringert ist.

Diese Aufgabe wird durch die Merkmale des Anspruchs 1 gelöst.

Zweckmäßige Weiterbildungen sind in den Unteransprüchen 2 bis 12 angegeben.

Die Erfindung ist nachfolgend anhand eines Ausführungsbeispiels mit Bezug auf die Zeichnung näher erläutert. Es zeigen
- Fig. 1: ein erfindungsgemäßes Profil, hier ein U-Profil, in Draufsicht;

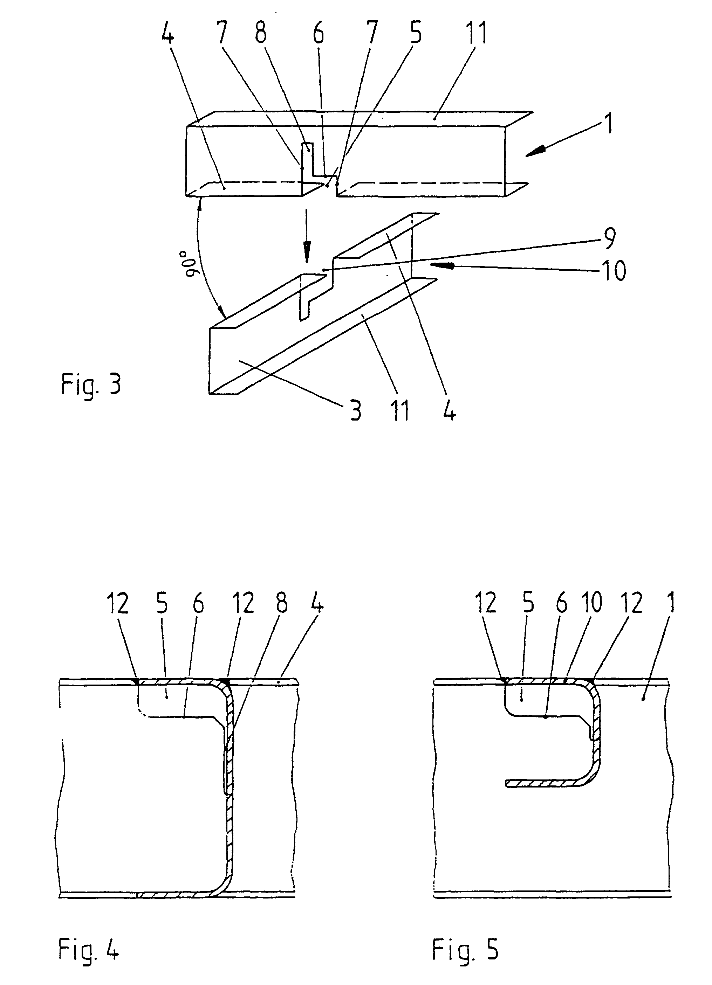

- Fig. 2: das Profil gemäß Fig. 1 in Seitenansicht;
- Fig. 3: zwei Profile einer Tragstruktur in perspektivischer Darstellung in montagefertiger Lage;
- Fig. 4: zwei gefügte Profile gleicher Steghöhe im Teilschnitt in einem Knotenpunkt in Seitenansicht;
- Fig. 5: zwei gefügte Profile unterschiedlicher Steghöhe im Teilschnitt in einem Knotenpunkt in Seitenansicht;
- Fig. 6: ein erfindungsgemäßes Profil mit zwei Gurten und Ausnehmungen zu beiden Seiten des Steges in Draufsicht und
- Fig. 7: das Profil gem. Fig. 6 in Seitenansicht.

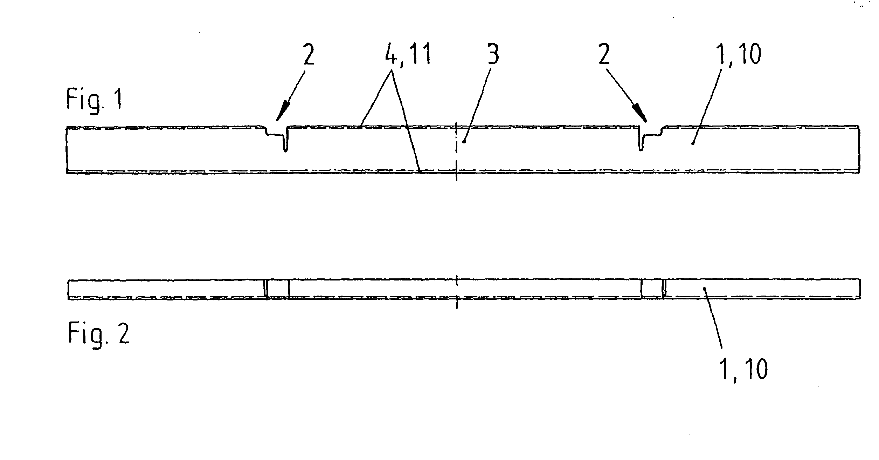

Das in Fig. 1 dargestellte Profil 1 weist eine oder mehrere Ausnehmungen 2 auf, die in der Ebene ihres Steges 3 und der Ebene eines vom Steg 3 abgewinkelten Gurtes 4 angeordnet sind. Jede Ausnehmung 2 weist eine erste Ausnehmung 5 von im wesentlichen rechteckigem Querschnitt auf. Die erste Ausnehmung 5 weist eine Kante 6 auf, die im wesentlichen parallel zur Längserstreckung des Profils 1 ausgerichtet ist. Parallel zu den Seitenkanten 7 der ersten Ausnehmung 5 ist eine Schlitzausnehmung 8 angeordnet, deren Breite größer als die Dicke des Steges 3 ausgebildet ist.

Der abgewinkelte Gurt 4 ist auf der Seite der ersten Ausnehmung 5 angeordnet, und die erste Ausnehmung 5 ist in diesem Gurt 4 als offener Durchbruch 9 weitergeführt.

Die Schlitzausnehmung 8 ist an einer Seitenkante 7 der ersten Ausnehmung 5 angeordnet, derart, daß die Ausnehmung 2, in Seitenansicht auf den Steg 3 des Profils 1, die Kontur eines Stuhles in Seitenansicht aufweist.

Ein das erste Profil 1 kreuzende, spiegelbildlich und um vorzugsweise 90 ° gedrehte, zweite Profil 10 greift in die Ausnehmung 2, d. h. in den Durchbruch 8, die erste Ausnehmung 5 und die Schlitzausnehmung 8 des ersten Profils 1 ein. Es entsteht eine Tragstruktur aus sich kreuzenden, steckbaren Profilen 1, 10, die nach dem ineinanderstecken einen oder mehrere Knotenpunkte ausbilden, je nach Anzahl der Profile 1, 10 und Kreuzungspunkte.

Die Gurte 4 der beiden Profile 1, 10 bilden eine Ebene. Die Profile 1, 10 sind in den Knotenpunkten (Kreuzungspunkten) fest miteinander verbunden, vorzugsweise mittels Schweißverfahren (Schweißnähte 12), mittels Löt- oder Klebeverfahren oder anderer geeigneter Fügeverfahren.

Die Profile 1, 10 der Tragstruktur sind vorzugsweise Biegeprofile aus Metall, insbesondere Stahl.

Die Profile 1, 10 der Tragstruktur weisen in einer bevorzugten Ausführungsform an der dem Gurt 4 gegenüberliegenden Seite einen weiteren, abgewinkelten zweiten Gurt 11 auf, wodurch eine stabilere, belastbarerer Tragstruktur gebildet ist.

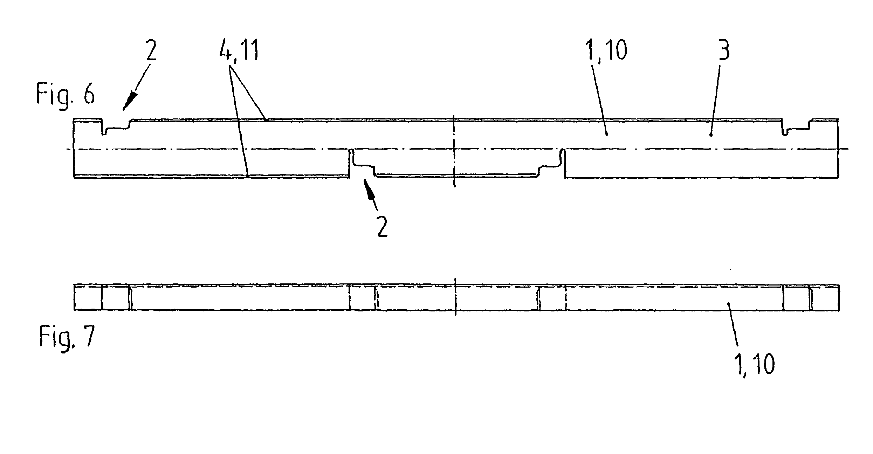

Der zweite Gurt 11 der Profile 1, 10 kann gem. Fig. 6 wie Gurt 4 gleichfalls Durchbrüche 8 und der Steg 3 an diesen Stellen Ausnehmungen 2 aufweisen.

Der zweite Gurt 11 der Profile 1, 10 kann in die gleiche Richtung wie der Gurt 4 abgewinkelt sein, derart, daß ein U-Profil gebildet ist.

Der zweite Gurt 11 der Profile 1, 10 kann in einer anderen Ausführungsform zur entgegengesetzten Seite des ersten Gurtes 4 abgewinkelt sein, derart, daß ein Z-Profil gebildet ist. Das Z-Profil weist in einer bevorzugten Ausführungsform bezüglich seines Steges 3 um 90 ° abgewinkelte Gurte 4, 11 auf.

Tragstrukturen mit Profilen 1, 10 in Form von U-Profilen werden vorzugsweise für Bodenelemente bzw. Untergestell-Tragstrukturen eingesetzt.

Tragstrukturen mit Profilen 1, 10 in Form von Z-Profilen werden vorzugsweise für Wandelemente von Schienenfahrzeugen eingesetzt, wobei Profile 1, 10 mit um jeweils 90 ° bezüglich des Steges 3 abgewinkelte Gurte 4, 11 besonders geeignet sind.

Zum Ineinanderstecken werden die zweiten Profile 10 gegenüber dem ersten Profil 1 spiegelbildlich um 180 ° bezüglich ihrer Längsachse gedreht und um 90 ° aus der Längsrichtung verschwenkt. Damit entsteht eine gitterrostartige Tragstruktur in der erfindungsgemäßen Ausbildung.

Die Tragstruktur für Wagenkästen und/oder Untergestellen von Schienenfahrzeugen wird somit aus sich kreuzende, steckbare Profile gebildet, die nach dem ineinander stecken und gegenseitiger Fixierung z. B. Schweißen, eine Vielzahl von Knotenpunkten (Kreuzungspunkten) aufweist.

Die Flächenauflage auf der Tragstruktur wird für Wand- und Deckenelemente vorzugsweise durch eine mittels Punktschweißung befestigte Beblechung gebildet, die als Außenwand dient.

### Bezugszeichenliste

- 1: Profil
- 2: Ausnehmung
- 3: Steg
- 4: Gurt
- 5: erste Ausnehmung
- 6: Kante
- 7: Seitenkante
- 8.: Schlitzausnehmung
- 9: Durchbruch
- 10: zweites Profil
- 11: zweiter Gurt
- 12: Schweißnaht

## Patentansprüche

1. Schienenfahrzeug mit einer Tragstruktur für die Flächenelemente des Wagenkastens und/oder Untergestelles, bestehend aus sich kreuzende, steckbare Profile (1, 10), welche nach dem Ineinanderstecken mindestens einen Knotenpunkt ausbilden und welche gleichartige Ausnehmungen (2) aufweisen, die in der Ebene ihres Steges (3) und mindestens eines vom Steg (3) abgewinkelten Gurtes (4) angeordnet sind, wobei jede Ausnehmung (2) eine erste Ausnehmung (5) von im Wesentlichen rechteckigem Querschnitt aufweist und wobei sich von der Kante (6) der ersten Ausnehmung (5), die im Wesentlichen parallel zur Längserstreckung der Profile (1, 10) ausgerichtet, ist, - ausgehend von der Kante (6) der ersten Ausnehmung (5) und parallel zu den Seitenkanten (7) der ersten Ausnehmung (5) - eine Schlitzausnehmung (8) auf den Gurt (4) erstreckt, deren Breite größer als die Dicke des Steges (3) ausgeführt ist und wobei der abgewinkelte Gurt (4) auf der Seite der ersten Ausnehmung (5) angeordnet ist, die in diesem Gurt (4) als offener Durchbruch (9) weitergeführt ist und wobei ein das erste Profil (1) kreuzende, spiegelbildlich bezüglich seiner Längsachse um 180 ° und bezüglich seiner Längsrichtung um vorzugsweise 90° gedrehtes, zweites Profil (10) in den Durchbruch (9), die erste Ausnehmung (5) und die Schlitzausnehmung (8) des ersten Profils (1) eingreift und wobei mindestens ie ein Gurt (4) beider Profile (1, 10) in einer gemeinsamen Ebene angeordnet ist, wobei die Profile (1, 10) in den Knotenpunkten mittels geeigneter Fügeverfahren unmittelbar miteinander fest verbunden sind.

2. Schienenfahrzeug mit einer Tragstruktur für Flächenelemente nach Anspruch 1, **dadurch gekennzeichnet, dass** die Schlitzausnehmung (8) an einer Seite der ersten Ausnehmung (5) angeordnet ist, derart, dass die Ausnehmung (2) - in Seitenansicht auf den Steg (3) des Profils (1) - die Kontur eines Stuhles in Seitenansicht aufweist.

3. Schienenfahrzeug mit einer Tragstruktur für Flächenelemente nach Anspruch 1 oder 2, **dadurch gekennzeichnet, dass** die Profile (1, 10) der Tragstruktur Biegeprofile aus Metall sind.

4. Schienenfahrzeug mit einer Tragstruktur für Flächenelemente nach einem oder mehreren der vorhergehenden Ansprüche 1 bis 3, **dadurch gekennzeichnet, dass** die Profile (1, 10) der Tragstruktur an der dem Gurt (4) gegenüberliegenden Seite einen weiteren, abgewinkelten, zweiten Gurt (11) aufweisen.

5. Schienenfahrzeug mit einer Tragstruktur für Flächenelemente nach Anspruch 1 oder 4, **dadurch gekennzeichnet, dass** der zweite Gurt (11) der Profile (1, 10) gleichfalls Durchbrüche (9) und der Steg (3) an diesen Stellen Ausnehmungen (2) aufweisen.

6. Schienenfahrzeug mit einer Tragstruktur für Flächenelemente nach Anspruch 4 oder 5, **dadurch gekennzeichnet, dass** die beiden Gurte (4, 11) der Profile (1, 10) zu einer Richtung abgewinkelt sind, derart, dass ein U-Profil geformt ist.

7. Schienenfahrzeug mit einer Tragstruktur für Flächenelemente nach Anspruch 4 oder 5, **dadurch gekennzeichnet, dass** die beiden Gurte (4, 11) der Profile (1, 10) zu entgegensetzten Seiten abgewinkelt sind, derart, dass ein Z-Profil geformt ist.

8. Schienenfahrzeug mit einer Tragstruktur für Flächenelemente nach Anspruch 4, 5 oder 7, **dadurch gekennzeichnet, dass** das Z-Profil bezüglich seines Steges (3) um 90 ° abgewinkelte Gurte (4, 11) aufweist.

9. Schienenfahrzeug mit einer Tragstruktur für Flächenelemente nach einem oder mehreren der vorhergehenden Ansprüche 1 bis 8, **dadurch gekennzeichnet, dass** die Profile (1, 10) in den Knotenpunkten mittels Schweiß-, Löt- oder Klebeverfahren fest miteinander verbunden sind.

10. Schienenfahrzeug mit einer Tragstruktur für Flächenelemente nach Anspruch 6, **dadurch gekennzeichnet, dass** eine Tragstruktur mit Profilen (1, 10) in Ausbildung mit U-Profilen vorzugsweise für Bodenelemente Verwendung findet.

11. Schienenfahrzeug mit einer Tragstruktur für Flächenelemente nach Anspruch 7 oder 8, **dadurch gekennzeichnet, dass** eine Tragstruktur mit Profilen (1, 10) in Ausbildung mit Z-Profilen mit um jeweils 90 ° bezüglich des Steges (3) abgewinkelten Gurten (4, 11) vorzugsweise für Wandelemente Verwendung findet.

12. Schienenfahrzeug mit einer Tragstruktur für Flächenelemente nach einem oder mehreren der vorhergehenden Ansprüche 1 bis 11, **dadurch gekennzeichnet, dass** die Flachenauflage auf der Tragstruktur durch eine mittels Punktschweißung befestigte Beblechung gebildet ist.

## Claims

1. Railway vehicle comprising a support structure for the surface elements of the coach body and/or underframe, consisting of intersecting, pluggable profiles (1, 10), which, after fitting together, form at least one junction and have similar recesses (2) arranged in the plane of their web (3) and at least one flange (4) angled off from the web (3), wherein each recess (2) has a first recess (5) with a substantially rectangular cross-section and wherein a slot recess (8) extends to the flange (4) from the edge (6) of the first recess (5), which is aligned substantially parallel to the longitudinal extension of the profiles (1, 10) - starting from the edge (6) of the first recess (5) and parallel to the side edges (7) of the first recess (5) - the width of the slot recess being larger in design than the thickness of the web (3) and wherein the angled-off flange (4) is arranged on the side of the first recess (5) which is guided onwards in this flange (4) as an open aperture (9) and wherein a second profile (10) crossing the first profile (1) and rotated mirror-symmetrically with respect to its longitudinal axis by 180° and with respect to its longitudinal direction by preferably 90°, engages in the aperture (9), the first recess (5) and the slot recess (8) of the first profile (1) and wherein at least one flange (4) of each of the two profiles (1, 10) is arranged in a common plane, wherein the profiles (1, 10) are directly rigidly connected to one another in the junctions by means of suitable joining methods.

2. Railway vehicle comprising a support structure for surface elements according to claim 1, **characterised in that** the slot recess (8) is arranged on one side of the first recess (5), in such a way that the recess (2) - in a lateral view onto the web (3) of the profile (1) - has the contour of a chair in lateral view.

3. Railway vehicle comprising a support structure for surface elements according to claim 1 or 2, **characterised in that** the profiles (1, 10) of the support structure are bending profiles made of metal.

4. Railway vehicle comprising a support structure for surface elements according to one or more of the preceding claims 1 to 3, **characterised in that** the profiles (1, 10) of the support structure have a further angled-off, second flange (11 ) on the side opposing the flange (4).

5. Railway vehicle comprising a support structure for surface elements according to claim 1 or 4, **characterised in that** the second flange (11) of the profiles (1, 10) likewise has apertures (9) and the web (3) has recesses (2) at these points.

6. Railway vehicle comprising a support structure for surface elements according to claim 4 or 5, **characterised in that** the two flanges (4, 11) of the profiles (1, 10) are angled off in a direction in such a way that a U-profile is formed.

7. Railway vehicle comprising a support structure for surface elements according to claim 4 or 5, **characterised in that** the two flanges (4, 11) of the profiles (1, 10) are angled off to opposing sides, in such a way that a Z-profile is formed.

8. Railway vehicle comprising a support structure for surface elements according to claim 4, 5 or 7, **characterised in that** the Z-profile has flanges (4, 11) angled off at 90° with respect to its web (3).

9. Railway vehicle comprising a support structure for surface elements according to one or more of the preceding claims 1 to 8, **characterised in that** the profiles (1, 10) are rigidly connected to one another in the junctions by means of welding, soldering or gluing methods.

10. Railway vehicle comprising a support structure for surface elements according to claim 6, **characterised in that** a support structure with profiles (1, 10) in a configuration with U-profiles is preferably used for base elements.

11. Railway vehicle comprising a support structure for surface elements according to claim 7 or 8, **characterised in that** a support structure with profiles (1, 10) in a configuration with Z-profiles with flanges (4, 11) angled off respectively at 90° with respect to the web (3) is preferably used for wall elements.

12. Railway vehicle comprising a support structure for surface elements according to one or more of the preceding claims 1 to 11, **characterised in that** the surface support on the support structure is formed by metal panelling fastened by means of spot-welding.

## Revendications

1. Véhicule ferroviaire avec une structure porteuse pour les éléments plans de la caisse de véhicule et/ou du châssis, composée de profilés croisés à emboîtement (1, 10) qui, une fois emboîtés les uns dans les autres, forment au moins un point de jonction et qui présentent des creux similaires (2) disposés dans le plan de leur aile (3) et d'au moins un rebord (4) coudé par rapport à l'aile (3), étant précisé que chaque creux (2) présente un premier creux (5) à section sensiblement rectangulaire, qu'il est prévu à partir du bord (6) du premier creux (5) qui est sensiblement parallèle à l'extension longitudinale des profilés (1, 10) - à partir du bord (6) du premier creux (5) et parallèlement aux bords latéraux (7) de celui-ci - un creux en forme de fente (8), en direction du rebord (4), dont la largeur est supérieure à l'épaisseur de l'aile (3), que le rebord coudé (4) est disposé sur le côté du premier creux (5) qui se prolonge dans ce rebord (4) sous la forme d'une ouverture (9), qu'un second profilé (10) qui croise le premier profilé (1) et qui est tourné de 180° par rapport à son axe longitudinal et de préférence de 90° par rapport à son sens longitudinal, en miroir, entre dans l'ouverture (9), dans le premier creux (5) et dans le creux en forme de fente (8) du premier profilé (1), qu'au moins un rebord (4) des deux profilés (1, 10) est disposé dans un plan commun et que les profilés (1, 10) sont directement solidarisés au niveau des points de jonction à l'aide de procédés d'assemblage appropriés.

2. Véhicule ferroviaire avec une structure porteuse pour éléments plans selon la revendication 1, **caractérisé en ce que** le creux en forme de fente (8) est disposé sur un côté du premier creux (5) de telle sorte que le creux (2) - si on regarde l'aile (3) du profilé (1) de côté - présente le contour d'une chaise vue de côté.

3. Véhicule ferroviaire avec une structure porteuse pour éléments plans selon la revendication 1 ou 2, **caractérisé en ce que** les profilés (1, 10) de la structure porteuse sont des profilés pliés en métal.

4. Véhicule ferroviaire avec une structure porteuse pour éléments plans selon l'une au moins des revendications précédentes 1 à 3, **caractérisé en ce que** les profilés (1, 10) de la structure porteuse présentent sur le côté opposé au rebord (4) un second rebord coudé (11).

5. Véhicule ferroviaire avec une structure porteuse pour éléments plans selon la revendication 1 ou 4, **caractérisé en ce que** le second rebord (11) des profilés (1, 10) présente lui aussi des ouvertures (9), et l'aile (3) présente à ces endroits des creux (2).

6. Véhicule ferroviaire avec une structure porteuse pour éléments plans selon la revendication 4 ou 5, **caractérisé en ce que** les deux rebords (4, 11) des profilés (1, 10) sont coudés dans un sens qui est tel qu'ils forment un profilé en U.

7. Véhicule ferroviaire avec une structure porteuse pour éléments plans selon la revendication 4 ou 5, **caractérisé en ce que** les deux rebords (4, 11) des profilés (1, 10) sont coudés vers des côtés opposés de manière à former un profilé en Z.

8. Véhicule ferroviaire avec une structure porteuse pour éléments plans selon la revendication 4, 5 ou 7, **caractérisé en ce que** le profilé en Z présente des rebords (4, 11) coudés à 90° par rapport à son aile (3).

9. Véhicule ferroviaire avec une structure porteuse pour éléments plans selon l'une au moins des revendications précédentes 1 à 8, **caractérisé en ce que** les profilés (1, 10) sont solidarisés au niveau des points de jonction à l'aide de procédés de soudage, de brasage ou de collage.

10. Véhicule ferroviaire avec une structure porteuse pour éléments plans selon la revendication 6, **caractérisé en ce qu'**une structure porteuse composée de profilés (1, 10) conçus comme des profilés en U est utilisée de préférence pour des éléments de plancher.

11. Véhicule ferroviaire avec une structure porteuse pour éléments plans selon la revendication 7 ou 8, **caractérisé en ce qu'**une structure porteuse composée de profilés (1, 10) conçus comme des profilés en Z avec des rebords (4, 11) coudés à 90° chacun par rapport à l'aile (3) est utilisée de préférence pour des éléments de paroi.

12. Véhicule ferroviaire avec une structure porteuse pour éléments plans selon l'une au moins des revendications précédentes 1 à 11, **caractérisé en ce que** l'appui plan sur la structure porteuse est défini grâce à un tôlage fixé par soudage par points.
